# EUROPEAN PATENT SPECIFICATION

(11) **EP 1 787 841 B1**
(45) Date of publication and mention of the grant of the patent: **25.08.2010**
(21) Application number: 06024245.0
(22) Date of filing: 22.11.2006
(51) Int. Cl.: B60J 5/10, B60R 13/04, B60Q 1/30

(54) **Resin-made vehicular garnish structure**
Kunstharzstruktur zur Fahrzeugverkleidung
Structure résineusse pour le carénage de véhicules

(30) Priority: 22.11.2005 JP 2005337350
(43) Date of publication of application: 23.05.2007
(73) Proprietor: HONDA MOTOR CO., LTD., Minato-ku Tokyo 107-8556 (JP)
(72) Inventor: Sase, Hiroyuki, Wako-shi Saitama (JP)
(74) Representative: Trossin, Hans-Jürgen

(56) References cited:
- FR-A- 2 796 915
- FR-A- 2 826 626
- JP-A- 5 004 520
- US-A1- 2004 124 659

## Description

The present invention relates to a vehicular garnish structure according to the preamble of claim 1 for attachment to a vehicle body as an exterior member of the vehicle.

Among various types of vehicles (particularly, automotive vehicles) known today are a type equipped with a tailgate for opening/closing a rear section of the body of the vehicle (hereinafter referred to as "vehicle body"). The tailgate is pivotably mounted at its upper end portion to the vehicle body. Rear section of the vehicle body is opened/closed by the tailgate being pivotally moved with the tailgate's upper end portion functioning as a pivot axis.

In some cases, part of the vehicle tailgate is formed into a complicated shape or contour for enhancement of design quality (particularly, external appearance) etc. of the vehicle. It is extremely difficult to form such a complicated contour with a single glass sheet, and thus, a plurality of glass sheets are usually required to form such a complicated contour. Consequently, it would be difficult to sufficiently enhance the design quality (particularly, outer appearance) of the tailgate. Complicated contour of the tailgate may be formed with a single steel sheet, which would however make it difficult to sufficiently enhance visibility of areas behind the vehicle body.

With a view to providing a solution to the aforementioned inconvenience, there has heretofore been proposed use of a resin-made garnish in a part of a tailgate having a complicated contour (see, for example, Japanese Patent Laid-Open Publication No. HEI-5-4520). In this case, the complicated contour can be formed with a single resin-made garnish, so that the design quality of the tailgate can be enhanced to a sufficient degree. In addition, the resin-made garnish can be constructed as a transparent window section, through which areas behind the vehicle body can be viewed from inside the vehicle with an enhanced visibility.

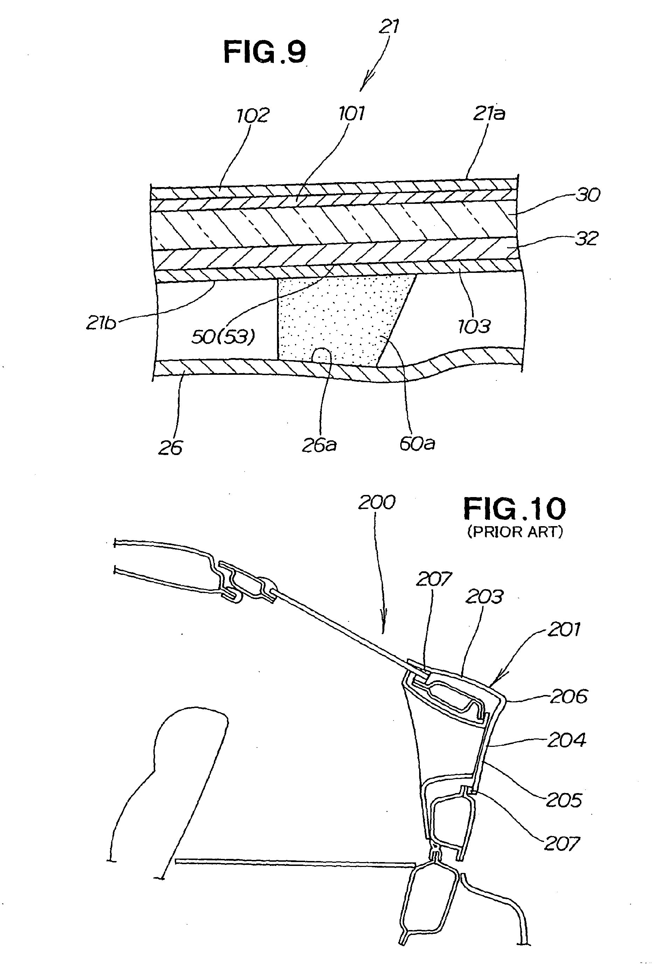

Fig. 10 is a sectional view showing the conventional resin-made garnish proposed in the aforementioned HEI-5-4520 publication. In the tailgate 200 shown in the HEI-5-4520 publication, there is incorporated the resin-made garnish 201. This resin-made garnish 201, having upper and lower half sections 5203 and 204, can be formed into a relatively complicated shape, e.g. substantial "doglegged" (or substantial "L") shape. The resin-made garnish 201 is formed generally as a one-piece garnish, so that the tailgate 200 can have an enhanced design quality (particularly, improved outer appearance). Further, the resin-made garnish 201 has a transparent section 205 that may be located in a desired position of the garnish 201 and that can be provided as a transparent window section. Through such a transparent window section provided in the resin-made garnish 201, areas behind the vehicle body can be viewed with an enhanced visibility.

According to the disclosure of the HEI-5-4520 publication, the resin-made garnish 201 incorporated in the tailgate 200 is secured to the body of the tailgate 200 only by an adhesive 207. In order to secure the resin-made garnish 201 to the body of the tailgate 200 more strongly and more reliably, fastener members, such as bolts, may be used. However, to secure the resin-made garnish 201 to the body of the tailgate 200 by means of fastener members, such as bolts, there arises a need to provide corresponding mounting members on the resin-made garnish 201, which undesirably necessitates increases in the necessary numbers of component parts and manufacturing steps.

Therefore, there was a demand for practical realization of a technique which allows the resin-made garnish 201 to be more firmly or strongly secured to the body of the tailgate 200 without increasing the necessary numbers of the component parts and manufacturing steps.

Further, according to the disclosure of the HEI-5-4520 publication, opaque coloring paint or opaque coloring film is applied to or insert-molded into each mounting section of the resin-made garnish 201, at which the garnish 201 is adhered to the body of the tailgate 200 by the adhesive, in order to provide the mounting section as an opaque section invisible from outside and thereby enhance the design quality (particularly, outer appearance). Such an arrangement too would increase the necessary number of the manufacturing steps. Therefore, there has been a further demand for practical realization of a technique which permits formation of the opaque section without increasing the necessary number of the manufacturing steps.

Document FR 2 769 915 A discloses a vehicular garnish structure according to the preamble part of claim 1, in which an exterior garnish member includes an opaque frame section having an integrated transparent window section. The frame section and the window section are mounted to each other by mounting means comprising a plurality of mounting pins.

In view of the foregoing prior art problems, it is an object of the present invention to provide an improved vehicular garnish structure which allows a garnish to be more strongly secured without increasing the necessary numbers of component parts and manufacturing steps and which also permits formation of an opaque section, making invisible from outside a mounting section of the garnish, without increasing the necessary number of the manufacturing steps, and which further permits good visibility of areas behind the vehicle body.

In order to accomplish the above-mentioned object, the present invention provides an improved vehicular garnish structure according to claim 1. Such garnish structure comprises a resin-made garnish for attachment to a vehicle body as an exterior member of the vehicle, the resin-made garnish including a transparent section and opaque section, characterized in that the transparent section is formed integrally of a transparent resin material and the opaque section is formed integrally of an opaque resin material, and in that the opaque section has a mounting section integrally formed therewith for attaching the resin-made garnish to the vehicle body.

According to the present invention, where the mounting section for attaching the resin-made garnish to the vehicle body is formed integrally with the opaque section of the resin-made garnish, the mounting section can be formed simultaneously with formation of the resin-made garnish. Thus, there is no need to add a separate step to provide the mounting section on the garnish. Further, there is no need to separately provide the mounting section, which can eliminate a need for increasing the necessary number of component parts of the garnish structure. As a result, the present invention allows the resin-made garnish to be fixed to the vehicle body strongly enough by means of the mounting section, without increasing the numbers of manufacturing steps and component parts.

Further, according to the present invention, where the transparent section and opaque section are formed integrally, the opaque section can be formed simultaneously with formation of the transparent section. Thus, there is no need to add a separate step to provide the opaque section on the resin-made garnish. As a result, the present invention allows the opaque section to be readily formed without increasing the numbers of manufacturing steps, and it can also hide (i.e., make invisible from outside) the mounting section by the opaque section.

In a preferred embodiment of the present invention, the mounting section includes a mounting portion integrally formed thereon for supporting a fastener member to attach the resin-made garnish to the vehicle body by means of the supported fastener member. The mounting portion, integrally formed on the mounting section of the opaque section, can reinforce the opaque section and thereby advantageously enhance the rigidity of the resin-made garnish. Further, with the mounting portion integrally formed on the mounting section of the opaque section, the rigidity of the mounting portion can be enhanced, which allows the garnish to be fixed to the vehicle body strongly by means of the fastener member. Further, with the arrangement that the resin-made garnish is fixed to the vehicle body by means of the fastener member, the fastener member can be used as a member for tentatively assembling the resin-made garnish to the vehicle body during manufacturing. As a result, the resin-made garnish can be readily fixed to the vehicle body without requiring much time and labor.

Further, in a preferred embodiment of the present invention, the mounting section includes an adhesive-adhering section for attaching the resin- made garnish to the vehicle body by means of an adhesive. Shape of the adhering section can be chosen relatively freely, so that the adhering section can be formed with ease so as to properly extend along the contour of the vehicle body. As a result, the resin-made garnish can be appropriately adhered to the vehicle body by means of the adhesive using the adhering section.

According to the present invention, the entire area of an outer surface of the resin-made garnish is formed by the transparent section, and the opaque section is overlappedly provided on a part of the reverse surface of the transparent section. The remaining part of the transparent section, on which the opaque section is not overlappedly provided, can be constructed as a transparent see-through window section. Because the opaque section is overlappedly provided on part of the reverse surface of the transparent section, the opaque section can be minimized in area while securing its sufficient rigidity. Namely, the transparent window section can have a sufficiently-great area with the opaque section minimized in area as above, so that areas behind the vehicle body can be viewed, through the transparent window section, with an enhanced visibility. Further, with the opaque section overlappedly provided on part of the reverse surface of the transparent section, the resin-made garnish can be constructed as a partly-two-layered structure, so that the resin-made garnish can have an enhanced rigidity.

Further, in a preferred embodiment of the present invention, the resin-made garnish has a space formed in a reverse face side thereof for receiving therein a light-emitting member capable of emitting light outwardly of the vehicle body, and a light-emitting-member-mounting section formed integrally with the opaque section, on the reverse surface of the resin-made garnish, for mounting the light-emitting member. Thus, by only mounting the light-emitting member to the mounting section, it is possible to accurately position the light-emitting member so that the emitted light from the light-emitting member appropriately illuminates the transparent section. Such arrangements facilitate operation for mounting the light-emitting member to the resin-made garnish. Further, because the light-emitting-member-mounting section can be formed simultaneously with the formation of the resin-made garnish, there is no need to add a separate step to provide the light-emitting-member-mounting section on the resin-made garnish. Further, because the light-emitting-member-mounting section can be formed integrally with the opaque section of the garnish, there is no need to separately provide the light-emitting-member-mounting section, so that it is possible to eliminate a need to increase the number of component parts. As a result, the present invention allows the light-emitting member to be appropriately mounted to the resin-made garnish without increasing the necessary numbers of the manufacturing steps and component parts.

Certain preferred embodiments of the present invention will hereinafter be described in detail, by way of example only, with reference to the accompanying drawings, in which:
Fig. 1 is a rear perspective view of a vehicle provided with a resin-made vehicular garnish structure according to an embodiment of the present invention;
Fig. 2 is an exploded rear perspective view of the resin-made vehicular garnish structure of the present invention;
Fig. 3 is a perspective view of the resin-made vehicular garnish structure of the present invention as viewed from the interior of a vehicle compartment;
Fig. 4 is a perspective view showing principal elements of the resin-made vehicular garnish structure of the present invention;
Fig. 5 is a sectional view taken along line 5 - 5 of Fig. 3;
Fig. 6 is a sectional view taken along line 6-6 of Fig. 3;
Fig. 7 is a sectional view taken along line 7 - 7 of Fig. 3;
Fig. 8A is a fragmentary enlarged view of a section indicated at 8a in Fig. 3, and Fig. 8B is a sectional view taken along line 8b - 8b of Fig. 8A;
Fig. 9 is a fragmentary enlarged view of a section indicated at 9 in Fig. 6; and
Fig. 10 is a sectional view showing a conventionally-known resin-made garnish.

First, it should be noted that the terms "front", "rear", "left" and "right" represent various directions as viewed from a human driver operating a vehicle and these directions are indicated by "Fr", "Rr", "L" and "R", respectively.

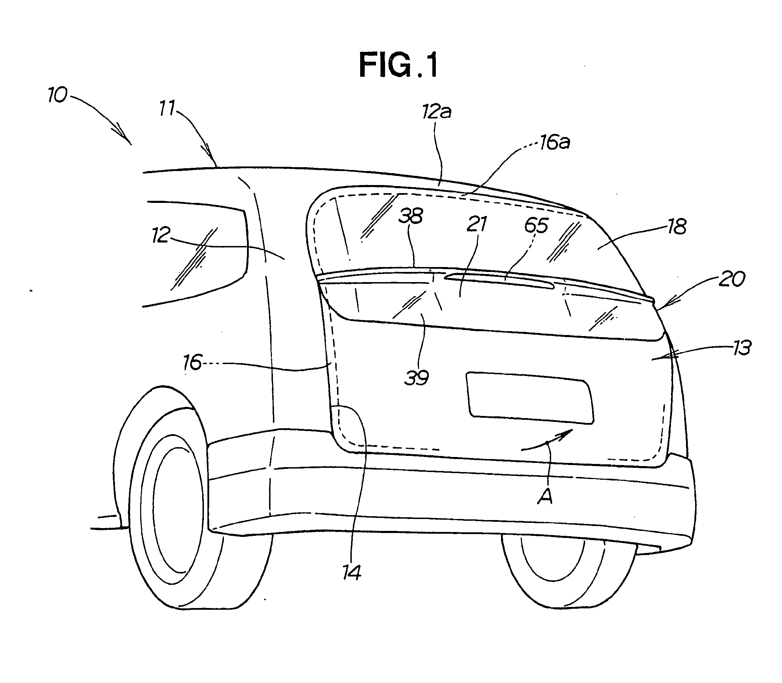

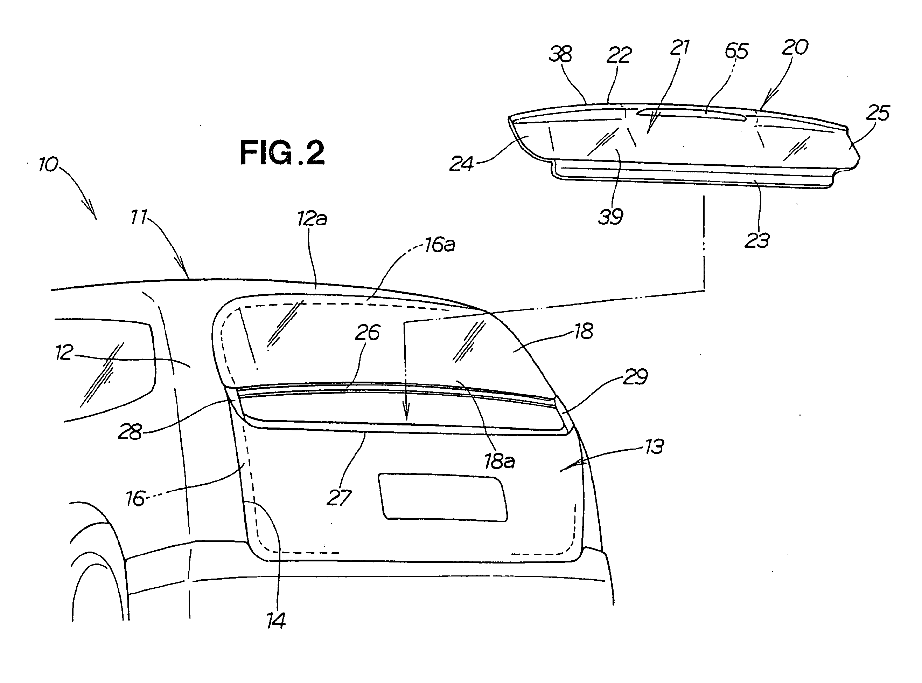

Fig. 1 is a rear perspective view of a vehicle provided with a resin-made vehicular garnish structure according to an embodiment of the present invention, and Fig. 2 is an exploded rear perspective view of the vehicle provided with the resin-made vehicular garnish structure.

The vehicle 10 includes a tailgate 13 in a rear section 12 of a vehicle body 11 (hereinafter referred to as "rear vehicle body section 12"), and a tailgate opening 14 in the rear vehicle body section 12 is openable and closable by the tailgate 13.

As seen in Fig. 2, the tailgate 13 includes a tailgate frame 16 with its upper end portion 16a pivotally mounted via a hinge (not shown) to an upper end portion 12a in such a manner that the tailgate 13 is vertically pivotally movable about the hinge.

Further, in the tailgate 13, a tailgate windowpane 18 is fitted to an upper half section of the tailgate frame 16, and the resin-made vehicular garnish structure 20 is secured adjacent to a lower end portion of the tailgate windowpane 18. The resin-made vehicular garnish structure 20 is disposed in a substantial widthwise-middle portion (i.e., middle portion in a width direction of the vehicle) of the tailgate 13.

The tailgate 13 opens the tailgate opening 14, formed in the rear vehicle body section, by being caused to pivot upward about the not-shown hinge as indicated by arrow A, and it closes the tailgate opening 14 by being caused to pivot downward about the not-shown hinge.

The resin-made vehicular garnish structure 20 includes a resin-made garnish 21 secured to the tailgate frame 16.

As shown in Fig. 2, the resin-made garnish 21 is fixed at its upper end portion 22 to a middle upper frame member 26 of the tailgate frame 16, and fixed at its lower end portion 23 to a middle lower frame member 27 of the 5tailgate frame 16.

Further, the resin-made garnish 21 is fixed at its left end portion 24 to a left frame member 28 of the tailgate frame 16, and fixed at its right end portion 29 to a right frame member 29 of the tailgate frame 16.

The middle upper frame member 26, middle lower frame member 27, left frame member 28 and right frame member 29 are component parts of the vehicle body 11.

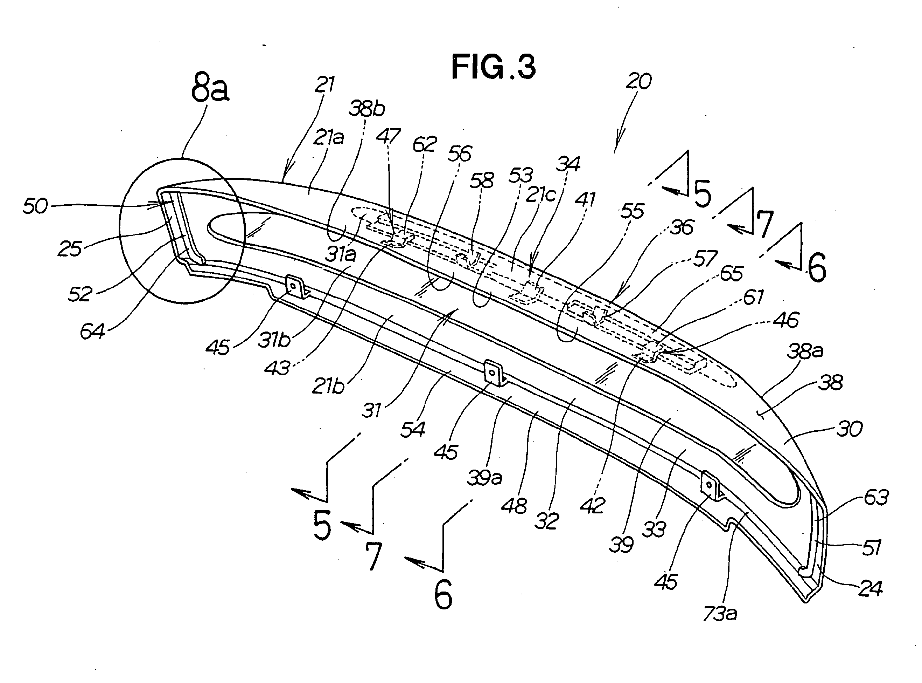

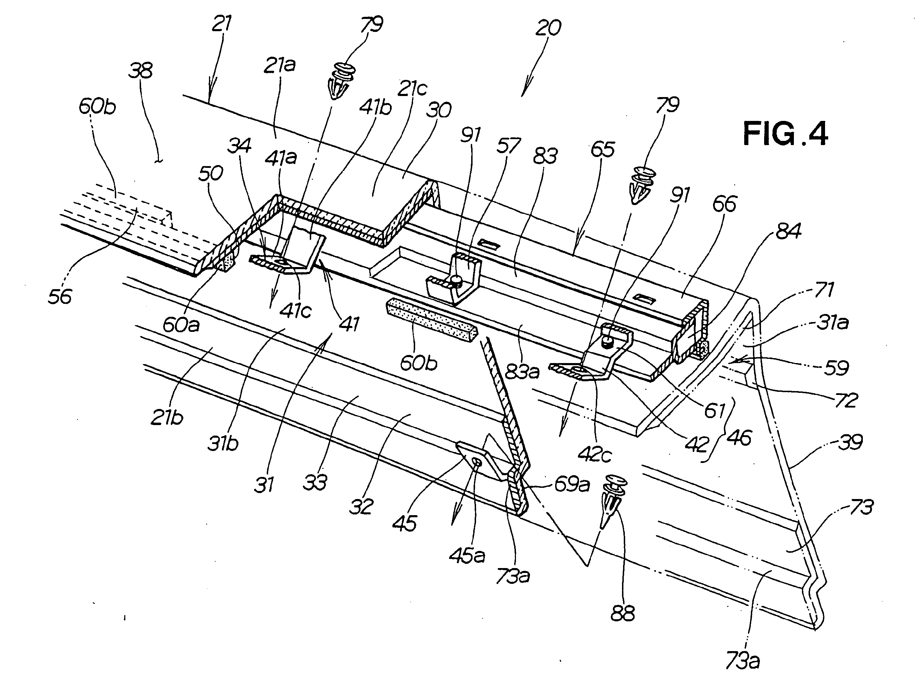

Fig. 3 is a perspective view of the resin-made vehicular garnish structure 20 of the present invention as viewed from inside a vehicle compartment, and Fig. 4 is a perspective view showing principal elements of the resin-made vehicular garnish structure 20.

As shown, in the resin-made vehicular garnish structure 20 of the invention, the resin-made garnish 21 is secured to the tailgate (vehicle body) 13 shown in Fig. 2 and functions as an exterior member of the tailgate 13. The resin-made garnish 21 includes a window section 31 formed by a transparent section 30, a blindfold section 33 formed by an opaque section 32, and a mounting section 34 and lamp-mounting section 36 integrally formed on the opaque section 32.

Namely, the resin-made garnish 21 is an elongated member generally comprising the transparent section 30 and opaque section 32 and extending in the width direction of the vehicle body.

As further shown in Fig. 3, the resin-made garnish 21 has a horizontal wall section 38 extending in a substantial horizontal direction from a lower end 18a of the tailgate windowpane 18 (see Fig. 2) toward the rear of the vehicle body, and a slanting wall section 39 extending rearwardly and downwardly from a rear end 38a of the horizontal wall section 38. The horizontal wall section 38 and slanting wall section 39 are formed integrally with each other.

Respective outer surfaces of the horizontal and slanting wall sections 38 and 39 constitute an entire area of an outer surface 21a of the resin-made garnish 21. In other words, the entire area of the outer surface 21a is formed by the transparent section 30. The opaque section 32 is overlappedly provided on a part of the inner or reverse surface of the transparent section 30.

The transparent and opaque sections 30 and 32 are integrally formed of transparent and opaque resin materials, respectively, and these transparent and opaque resin materials may, for example, be polycarbonate materials.

With the opaque section 32 overlappedly provided on a part of the reverse surface of the transparent section 30, the remaining part of the transparent section 30, on which the opaque section 32 is not overlappedly provided, can be constructed as a transparent window section.

Further, because a partly-two-layered structure is provided by the opaque section 32 being overlappedly provided on a part of the reverse surface of the transparent section 30, the opaque section 32 can be minimized in area while securing its rigidity. Thus, the transparent window section can have a great area with the opaque section 32 minimized in area, so that areas behind the vehicle body can be viewed with an enhanced visibility through the window section of the garnish 21.

Further, because the resin-made garnish 21 is constructed as the partly-two-layered structure comprising the transparent section 30 and opaque section 32 with the opaque section 32 overlappedly provided on a part of the reverse surface of the transparent section 30 as set forth above, it can have an enhanced rigidity.

Further, the transparent and opaque sections 30 and 32 are formed integrally with each other, so that the opaque section 32 can be formed simultaneously as the transparent section 30 is formed. Thus, there is no need to add a separate step to provide the opaque section 32 on the resin-made garnish 21; that is, it is possible to form the opaque section 32 without increasing the number of the manufacturing steps.

Further, in the instant embodiment, the blindfold section 33 is formed by the opaque section 32 overlappedly provided on a part of the reverse surface of the transparent section 30, while the window section 31 is formed by the remaining part of the reverse surface of the transparent section 30 (on which the opaque section 32 is not overlappedly provided).

As an example, the window section 31 includes a lamp window 31a provided in an upper portion of the slanting wall section 39, and a viewing window 31b provided in a substantial widthwise-middle portion (i.e., substantial middle portion in the width direction of the vehicle) of the slanting wall section 39. Entire area of an inner or reverse surface 21b of the resin-made garnish 21 is formed by the inner surface (i.e., surface facing toward the vehicle compartment) of the opaque section 32 and reverse surface of the window section 31. The transparent and opaque sections 30 and 32 are formed integrally with each other through, for example, two-color molding.

As viewed in plan, the slanting wall section 39 is curved arcuately so as to protrude rearwardly from left and right end portions of the resin-made garnish 21 toward the widthwise center of the vehicle body. Namely, the outer surface 21a of the resin-made garnish 21 faces outwardly of the vehicle in a convex shape, while the reverse surface 21b of the resin-made garnish 21 faces toward the vehicle compartment (i.e., inwardly of the vehicle) in a concave shape.

The mounting section 34 is molded integrally with the opaque section 32 when the transparent and opaque sections 30 and 32 are formed through, for example, two-color molding. The mounting section 34 is provided for mounting the resin-made garnish 21 to the vehicle body 11. The mounting section 34 can be formed simultaneously with the formation of the resin-made garnish 21. Thus, there is no need to add a separate step to provide the mounting section 34. Further, because the mounting section 34 is formed integrally with the opaque section 32, there is no need to separately provide the mounting section 34, which can eliminate a need for increasing the necessary number of the component parts.

As seen in Figs. 3 and 4, the mounting section 34 includes an upper middle mounting portion 41 formed on a widthwise-middle portion 21c of the horizontal wall section 38; an upper left mounting portion 42 formed on the horizontal wall section 38 to the left of the upper middle mounting portion 41; an upper right mounting portion 43 formed on the horizontal wall section 38 to the right of the upper middle mounting portion 41; and three lower mounting portions 45 formed on a lower portion 39a of the slanting wall section 39.

The above-mentioned upper middle mounting portion 41, upper left mounting portion 42, upper right mounting portion 43 and lower mounting portions 45 support fastener members 79 and 88 in order to fasten or fix the resin-made garnish 21 to the vehicle body 11 by means of the fastener members 79 and 88.

One of the lower mounting portions 45 is located in a substantial middle portion, in the width direction of the vehicle, of the slanting wall section 39, and the other two lower mounting portions 45 are located on left and right portions, in the width direction of the vehicle, of the slanting wall section 39.

Because the upper middle mounting portion 41, upper left mounting portion 42, upper right mounting portion 43 and lower mounting portions 45 are 5provided integrally on the opaque section 32, the opaque section 32 can be reinforced with these mounting portions 41 - 43 and 45. In this way, it is possible to significantly enhance the rigidity of the opaque section 32 and hence the resin-made garnish 21, and each of the upper middle mounting portion 41, upper left mounting portion 42, upper right mounting portion 43 and lower mounting portions 45 can have an enhanced rigidity.

With the enhanced rigidity of the mounting portions 41-43 and 45, the resin-made garnish 21 can be strongly fixed to the vehicle body 11 by means of the fastener members 79 and 88; these fastener members 79 and 88 may be in the form of clips. Thus, the fastener members (such as clips) 79 and 88 can be used as means for tentatively fastening the resin-made garnish 21 to the vehicle body 11 during manufacturing. In this way, the step of mounting the resin-made garnish 21 to the vehicle body 11 can be readily performed without requiring much time and labor.

The mounting section 34 further includes left and right adhering members 63 and 64 on and along left and right end portions 24 and 25 of the opaque section 32 of the resin-made garnish 21. The left and right adhering members 63 and 64 have left and right adhering portions 51 and 52, respectively; these portions 51 and 52 function as adhering surfaces.

In addition, the mounting section 34 includes an upper adhering portion 53 provided on a front end region 38b of the horizontal wall section 38, and a lower adhering portion 54 provided on a lower end region 39a of the slanting wall section 39. The left and right adhering portions 51 and 52 and the upper and lower adhering portions 53 and 54 form a peripheral edge section 48 of the resin-made garnish 21; the peripheral edge section 48 forms an entire periphery of the reverse surface 21b of the resin-made garnish 21.

The left and right adhering portions 51 and 52 and upper and lower adhering portions 53 and 54 together constitute a first adhering section 50; namely, the first adhering section 50 is provided along the entire peripheral edge section 48 of the reverse surface 21b of the resin-made garnish 21.

The mounting section 34 further includes left and right second adhering sections 55 and 56 provided on the front end region 38b of the horizontal wall section 38, which are located on the reverse surface 21b of the garnish 21 adjacent to the widthwise-middle portion 21c of the horizontal wall section 38 and are separate from the first adhering section 50. Namely, the second adhering sections 55 and 56 are provided on a widthwise-middle portion (i.e., substantial middle portion in the width direction of the vehicle) of the resin-made garnish 21.

More specifically, the left second adhering section 55 is provided to the left of the upper middle mounting portion 41 and extends parallel to the upper adhering portion 53 of the first adhering section 50, and the right second adhering section 55 is provided to the right of the upper middle mounting portion 41 and extends parallel to the upper adhering portion 53.

The first adhering section 50 is provided for adhering the resin-made garnish 21 to the vehicle body 11 by means of an adhesive 60a, while the second adhering sections 55 and 56 are provided for adhering the resin-made garnish 21 to the vehicle body 11 by means of adhesives 60b.

Namely, in the vehicular garnish structure of the present invention, the mounting section 34 includes the first adhering section 50 and second adhering sections 55 and 56 that are adhered to the vehicle body 11 by means of the adhesive 60a and 60b, respectively; thus, the resin-made garnish 21 can be adhered appropriately to the vehicle body 11 by means of the adhesive 60a and 60b.

Note that, where the resin-made garnish 21 has a relatively great size or has a particular shape, the garnish 21 tends to vibrate in its widthwise-middle portion even though the peripheral edge section 48, i.e. first adhering section 50, of the garnish 21 is adhered to the vehicle body 11. This is why the second adhering sections 55 and 56 located near the widthwise-middle of the garnish 21 are also adhered to the vehicle body 11 separately from the first adhering section 50; that is, the second adhering sections 55 and 56 can prevent the widthwise-middle portion of the resin-made garnish 21 from vibrating and thereby minimize noise sound that would be produced due to the vibration of the resin-made garnish 21.

The resin-made garnish 21 also tends to vibrate in its widthwise-middle portion due to its elongate shape extending in the width direction of the vehicle. Such vibration of the garnish 21 too can be effectively avoided by the second adhering sections 55 and 56 located near the widthwise-middle of the garnish 21.

Further, because the second adhering sections 55 and 56 extend parallel to the upper adhering portion 53 of the first adhering section 50, they can have sufficient lengths in the width direction. Thus, by just providing the second adhering sections 55 and 56 so as to extend parallel to part of the first adhering section 50, it is possible to secure a necessary length of adhesion to the vehicle body 11. As a result, the resin-made garnish 21 can be adhered appropriately to the vehicle body 11, so that unwanted vibration of the resin-made garnish 21 can be minimized efficiently.

Provision, at a plurality of positions, of the left and right second adhering sections 55 and 56 can adhere the resin-made garnish 21 to the vehicle body 21 even more appropriately.

Further, a space 59 is provided in the reverse side of the resin-made garnish 21, and a stop lamp 65, capable of emitting light rearwardly of the vehicle body, is accommodated in the space 59.

As best seen in Fig. 3, the lamp mounting section 36 is formed integrally with the opaque section 32 and includes left and right inner lamp mounting portions 57 and 58 located to the left and right, respectively, of the upper middle mounting portion 41 of the horizontal wall section 38. The lamp mounting section 36 also includes a left outer lamp mounting portion 61 located to the left of the left inner lamp mounting portion 57, and a right outer lamp mounting portion 62 located to the right of the right inner lamp mounting portion 58.

The left inner lamp mounting portion 57 is located rearwardly of the left second adhering section 55, while the right inner lamp mounting portion 58 is located rearwardly of the right second adhering section 56.

The left outer lamp mounting portion 61 and upper left mounting portion 42 are formed integrally with each other to constitute a left mounting member 46, while the right outer lamp mounting portion 62 and upper right mounting portion 43 are formed integrally with each other to constitute an integral right mounting member 47.

The stop lamp 65 is mounted to the lamp mounting section 36, i.e. to the left and right inner lamp mounting portions 57 and 58 and left and right outer lamp mounting portions 61 and 62 of the mounting section 36. The stop lamp 65 has a lens 66 located inwardly of the lamp window 31a in opposed relation to the window 31a, as shown in Fig. 4. Thus, light emitted from the stop lamp 65 is irradiated outwardly of the vehicle body 11 through the lamp window 31a.

Thus, by only mounting the stop lamp 65 to the mounting section 36, it is possible to accurately position the stop lamp 65 so that the emitted light from the lamp 65 illuminates the e lamp window 31a.

Such arrangements facilitate operation for mounting the lamp 65 to the resin-made garnish 21. Further, because the lamp mounting section 36 can be formed simultaneously with the formation of the resin-made garnish 21, there is no need to add a separate step to provide the lamp mounting section 36 on the resin-made garnish 21. Further, because there is no need to separately provide the lamp mounting section 36, the aforementioned arrangements can eliminate a need to increase the number of the component parts. As a result, the instant embodiment allows the stop lamp 65 to be appropriately mounted to the resin-made garnish 21 without increasing the necessary numbers of the manufacturing steps and component parts.

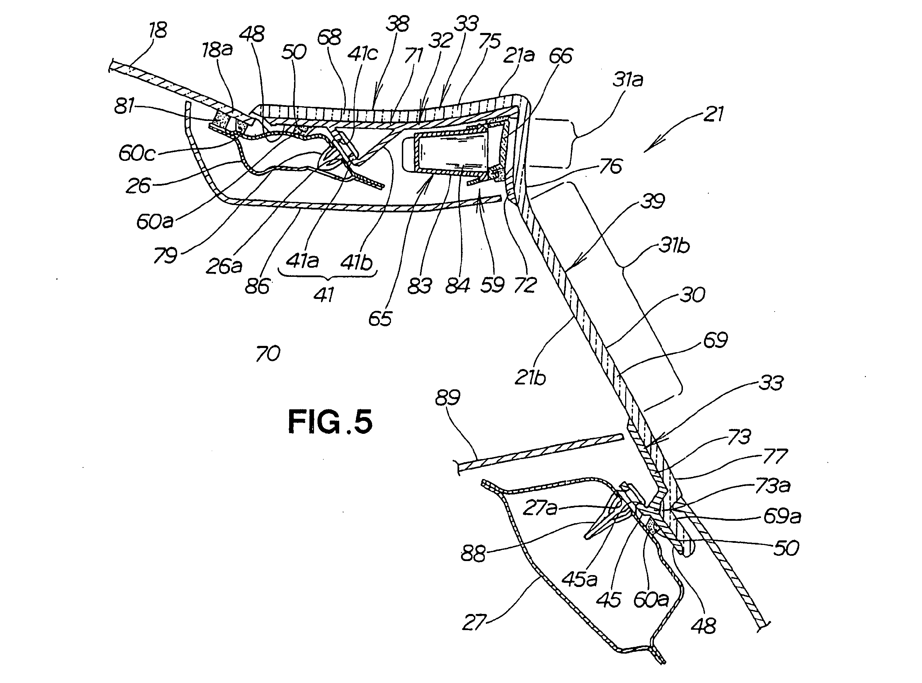

Fig. 5 is a sectional view taken along line 5 - 5 of Fig. 3, which particularly shows the resin-made vehicular garnish structure mounted on the vehicle body.

As shown, the resin-made garnish 21 is formed into a substantial "doglegged" (or substantial "L") sectional shape, which comprises the horizontal wall section 38 extending in a substantial horizontal direction toward the rear of the vehicle body 11 and the slanting wall section 39 extending downwardly and toward the rear of the vehicle body 11.

The outer surface 21a of the resin-made garnish 21 is formed by the outer surface of the transparent section 30, and it comprises a horizontal transparent surface portion 68 forming the surface of the horizontal wall section 38 and a slanting transparent surface portion 69 forming the surface of the slanting wall section 39. The horizontal transparent surface portion 68 and slanting transparent surface portion 69 together constitute a substantially-doglegged surface. The slanting transparent surface portion 69 has a lower-end stepped portion 69a that is an inwardly-concaved outer surface portion.

As noted above, the opaque section 32 is overlappedly provided on part of the reverse surface of the transparent section 30. More specifically, a horizontal opaque portion 71, upper opaque portion 72 and lower opaque portion 73 of the opaque section 32 are overlappedly provided on the reverse surface of the transparent section 30, to thereby provide a horizontal blindfold portion 75, upper blindfold portion 76 and lower blindfold portion 77 of the blindfold section 33.

With the horizontal blindfold portion 75, upper blindfold portion 76 and lower blindfold portion 77 provided in the aforementioned manner, the remaining part of the resin-made garnish 21, on which the opaque section 32 is not overlappedly provided, is constructed as the lamp window 31a and viewing window 31b.

Further, the lower opaque portion 73, overlappedly provided on the stepped portion 69a, forms a stepped portion 73a protruding toward the interior of the vehicle compartment 70.

The upper middle mounting portion 41 is formed on the inner surface of the horizontal opaque portion 71, and this upper middle mounting portion 41 includes front and rear inclined wall portions 41a and 41b to together form a substantial V sectional shape. These front and rear inclined wall portions 41a and 41b are integrally connected at their upper ends to the horizontal opaque portion 71, and a mounting hole 41c is formed in the front inclined wall portion 41a.

The front inclined wall portion 41a abuts against the above-mentioned middle upper frame member 26 of the tailgate frame 16, and the clip 79 is inserted through the mounting hole 41c of the front inclined wall portion 41a and mounting hole 26a of the middle upper frame member 26 so that the front inclined wall portion 41a is fixed to the middle upper frame member 26 via the inserted clip 79.

The first adhering section 50, provided along the peripheral edge section 48, of the resin-made garnish 21 is adhered to the middle upper frame member 26 of the vehicle body.

The middle upper frame member 26, adhesive 60a and upper middle mounting portion 41 are hidden by the horizontal blindfold portion 75 so as not to be visible from outside the vehicle.

The tailgate windowpane 18 has a lower end portion 18a placed on the middle upper frame member 26 via a seal member 81 and adhered to the middle upper frame member 26 by means of an adhesive 60c.

The above-mentioned space 59, provided in the reverse surface side of the resin-made garnish 21 and having the stop lamp 65 received therein, is located rearwardly of the upper middle mounting portion 41.

For example, the stop lamp 65 is in the form of a light emitting diode 84 accommodated in a case 83, and the lens 66 located inwardly of the lamp window 31a faces a light emitting surface of the light emitting diode 84. The stop lamp 65 is hidden by the horizontal blindfold portion 75 so as not to be visible from outside the vehicle.

The middle upper frame member 26, upper middle mounting portion 41, clip 79 and stop lamp 65 are covered with a lining member 86 so as not to be visible from inside the vehicle compartment 70.

The middle lower mounting portion 45 is formed integrally with the stepped portion 73a of the lower opaque portion 73. The lower mounting portion 45 projects obliquely upward from the stepped portion 73a and has a mounting hole 45a.

The lower mounting portion 45 abuts against the above-mentioned middle lower frame member 27 of the tailgate frame 16, and the clip 88 is inserted through the mounting hole 45a of the lower mounting portion 45 and mounting hole 27a of the middle lower frame member 27 so that the lower mounting portion 45 is fixed to the middle lower frame member 27 via the inserted clip 88.

The left and right lower mounting portions 45 shown in Fig. 3 are constructed similarly to the middle lower mounting portion 45 and mounted to the middle lower frame member 27 in a similar manner to the middle lower mounting portion 45.

The first adhering section 50, provided along the peripheral edge section 48, of the resin-made garnish 21 is adhered to the middle lower frame member 27 of the vehicle body by means of the adhesive 60a.

The middle lower frame member 27, adhesive 60a and lower mounting portion 45 are hidden by the lower blindfold portion 77 so as not to be visible from outside the vehicle.

Further, the middle lower frame member 27, lower mounting portion 45 and clip 88 are covered with a lining member 89 so as not to be visible from inside the vehicle compartment 70.

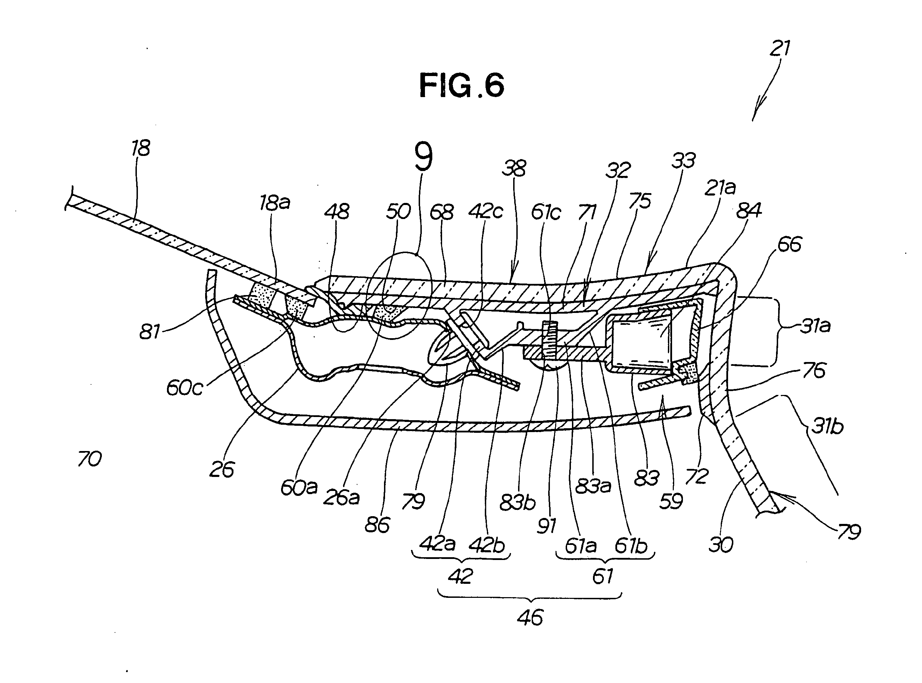

Fig. 6 is a sectional view taken along line 6 - 6 of Fig. 3, which particularly shows the resin-made vehicular garnish structure mounted on the vehicle body.

As shown, the left mounting member 46, which is formed integrally with the reverse surface of the horizontal opaque portion 71, includes the upper left mounting portion 42 and left outer lamp mounting portion 61.

The upper left mounting portion 42 includes front and rear inclined wall portions 42a and 42b to together form a substantial V sectional shape. The front inclined wall portion 42a is integrally connected at its upper end to the horizontal opaque portion 71, while the rear inclined wall portion 42b is integrally connected at its upper end to a horizontal portion 61a of the left outer lamp mounting portion 61. Mounting hole 42c is formed in the front inclined wall portion 42a.

The front inclined wall portion 42a abuts against the above-mentioned middle upper frame member 26 of the tailgate frame 16, and the clip 79 is inserted through the mounting hole 42c of the front inclined wall portion 42a and mounting hole 26a of the middle upper frame member 26 so that the front inclined wall portion 42a is fixed to the middle upper frame member 26 via the inserted clip 79.

The upper right mounting portion 43 shown in Fig. 3 is constructed similarly to the upper left mounting portion 42 and mounted to the middle upper frame member 26 in a similar manner to the upper left mounting portion 42.

The left outer lamp mounting portion 61 includes the horizontal portion 61a extending substantially parallel to the horizontal opaque portion 71, and an inclined wall portion 61b extending obliquely upward from the rear end of the horizontal portion 61a. The horizontal portion 61a has a screw hole 61c formed substantially centrally therein and is integrally connected at its front end to the upper end of the rear inclined wall portion 42b. The inclined wall portion 61b has its upper end integrally connected to the horizontal opaque portion 71.

Mounting portion 83a of the case 83 abuts against the above-mentioned horizontal portion 61a, a bolt 91 is inserted through a mounting hole 83b of the mounting portion 83a and the inserted bolt 91 is screwed into the screw hole 61c, so that the mounting portion 83a of the case 83 is fastened to the horizontal portion 61a. The mounting portion 83a of the case 83 is mounted to the right outer lamp mounting portion 62 shown in Fig. 3, in a similar manner to the left outer lamp mounting portion 61.

The left mounting member 46, clip 79 and bolt 91 are hidden by the horizontal blindfold portion 75 so as not to be visible from outside the vehicle.

Further, the left mounting member 46, clip 79 and bolt 91 are covered with the lining member 86 so as not to be visible from inside the vehicle compartment 70.

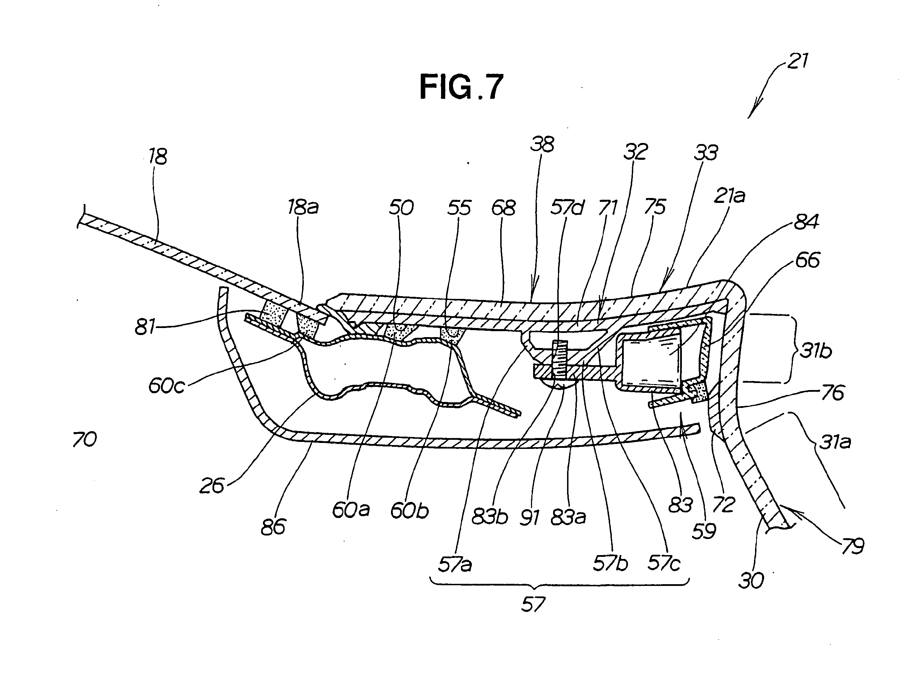

Fig. 7 is a sectional view taken along line 7 - 7 of Fig. 3, which particularly shows the resin-made vehicular garnish structure mounted on the vehicle body.

As shown, the left inner lamp mounting portion 57, which is formed integrally with the inner surface of the horizontal opaque portion 71, includes a front wall portion 57a extending downward from the horizontal opaque portion 71, a horizontal portion 57b extending horizontally rearward from the front wall portion 57a, and an inclined wall portion 57c extending obliquely upward from the rear end of the horizontal portion 57b toward the rear of the vehicle body.

The front wall portion 57a is connected at its upper end to the horizontal opaque portion 71. The horizontal portion 57b has a screw hole 57d formed substantially centrally therein, and the inclined wall portion 57c is also connected at its front end to the horizontal opaque portion 71.

The mounting portion 83a of the case 83 abuts against the above- mentioned horizontal portion 57b, a bolt 91 is inserted through the mounting hole 83b of the mounting portion 83a and the inserted bolt 91 is screwed into the screw hole 57d of the horizontal portion 57b, so that the mounting portion 83a of the case 83 is fastened to the he horizontal portion 57b. The mounting portion 83a of the case 83 is mounted to the right inner lamp mounting portion 58 shown in Fig. 3, in a similar manner to the left inner lamp mounting portion 57.

The left inner lamp mounting portion 57 and bolt 91 are hidden by the horizontal blindfold portion 75 so as not to be visible from outside the vehicle.

Further, the left inner lamp mounting portion 57 and bolt 91 are covered with the lining member 86 so as not to be visible from inside the vehicle compartment 70.

The first adhering section 50 is adhered to the middle upper member 26 by means of the adhesive 60a, and the left second adhering section 55 is located close to the widthwise middle of the resin-made garnish 21 separately from the first adhering section 50 and adhered to the middle upper member 26 by means of the adhesive 60b.

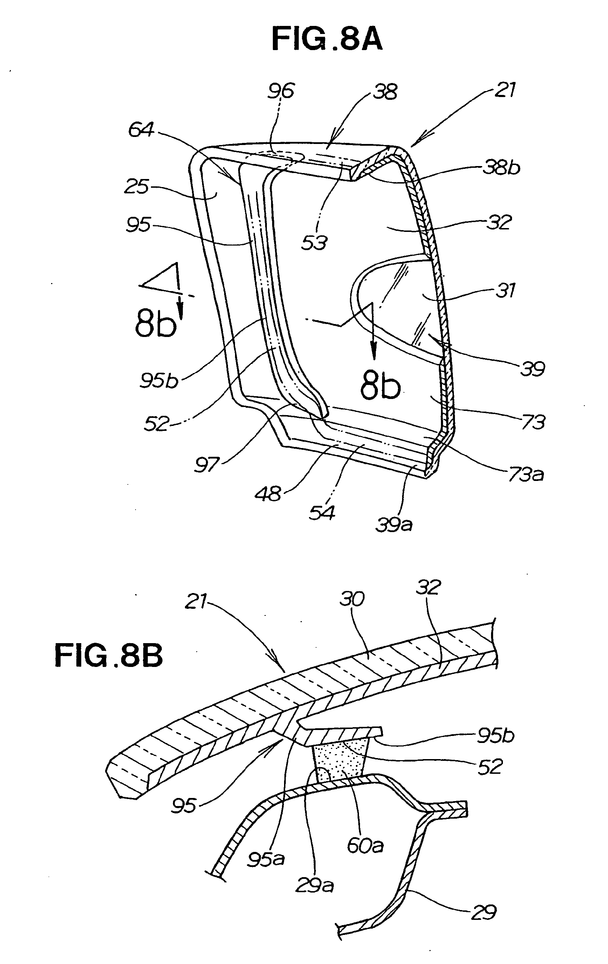

Fig. 8A is a fragmentary enlarged view of a section 8a in Fig. 3, and Fig. 8B is a sectional view taken along line 8b - 8b of Fig. 8A.

In a region adjacent to the right end portion 25 (i.e., part of the peripheral edge section 48) of the resin-made garnish 21, the opaque section 32 includes the right adhering member 64. The right adhering member 64 includes an intermediate adhering portion 95 extending along the right end portion 25, upper adhering portion 96 extending along the horizontal wall section 38 from the upper end of the intermediate adhering portion 95, and lower adhering portion 97 extending along the stepped portion 73a from the lower end of the intermediate adhering portion 95 to the lower opaque portion 73.

As shown in Fig. 8B, the intermediate adhering portion 95 includes a base 95a extending, in a vertical direction of the vehicle body, along the right end portion 25, and an adhering portion 95b extending from the base 95a toward the widthwise middle of the vehicle. The adhering portion 95b is positioned parallel to an adhering surface 29a of the right frame member 29 shown in Fig. 2.

As shown in Fig. 8A, the upper adhering portion 96 lies along the front end region 38b of the horizontal wall section 38, so that the upper adhering portion 96 is bonded to the upper adhering portion 53 on the reverse surface of the horizontal wall section 38. The upper adhering portion 96 is positioned parallel to the adhering surface 29a of the right frame member 29 shown in Fig. 2.

The lower adhering portion 97 lies along the lower end portion 39b of the slanting wall section 39, so that the lower adhering portion 97 is bonded to the lower adhering portion 54 on the reverse surface of the lower end portion 39b. The lower adhering portion 97 is positioned parallel to the adhering surface 29a of the right frame member 29 shown in Fig. 2.

With the adhering portion 95b, upper adhering portion 96 and lower adhering portion 97 positioned parallel to the adhering surface 29a of the right frame member 29 as set forth above, the right adhering portion 52 of the right adhering member 64 faces the adhering surface 29a in parallel relation to the latter. In this way, the right adhering portion 52 is adhered to the adhering surface 29a of the right frame member 29 by means of the adhesive 60a.

The left and right adhering members 63 and 64 are formed horizontally symmetrical with each other. Thus, the left adhering portion 51 can be adhered to the adhering surface of the left frame member 28 by means of the adhesive 60a.

As described above in relation to Fig. 8, the mounting section 34 includes the left and right adhering members 63 and 64 having the left and right adhering portions 51 and 52, respectively, and the left and right adhering portions 51 and 52 are adhered to the vehicle body 11 by means of the adhesive 60a.

Shape of the left and right adhering members 63 and 64 can be chosen relatively freely as long as the adhering members 63 and 64 can be provided to extend along the contour of the vehicle body 11. Thus, the resin-made garnish 21 can be appropriately adhered to the vehicle body 11 by the adhesive 60a using the adhering members 63 and 64.

As set forth above, the upper middle mounting portion 41, upper left mounting portion 42 and upper right mounting portion 43 are secured to the middle upper member 26 by means of the clips 79, and the middle lower mounting portion 45 and left and right lower mounting portions 45 are secured to the middle lower member 27 by means of the clips 88. In addition, the first adhering section 50 is adhered to the vehicle body 11 by means of the adhesive 60a, while the left and right second adhering sections 55 and 56 are adhered to the vehicle body 11 by means of the adhesives 60b.

With the aforementioned arrangements, the resin-made garnish 21 can be readily fixed to the vehicle body 11 in an appropriate manner with a sufficient strength.

Further, the stop lamp 65 is attached to the left and right outer lamp mounting portions 61 and 62 by means of the bolts 91 and to the left and right inner lamp mounting portions 57 and 58 by means of the bolts 91. Thus, the stop lamp 65 can be readily attached to the resin-made garnish 21 in an appropriate manner.

Fig. 9 is a fragmentary enlarged view of a section indicated at 9 in Fig. 6.

Although only the transparent and opaque sections 30 and 32 of the resin-made garnish 21 have been described above, as primary components of the resin-made garnish 21, in relation to Figs. 1-8, the garnish 21 also includes a protection layer etc. The protection layer will be described below with reference to Fig. 9 in conjunction with Figs. 3 and 4.

In the resin-made garnish 21 where the outer surface 21a of the transparent section 30 faces outwardly of the vehicle body, it is possible that the surface 21 will deteriorate due to exposure to rain, wind, etc. The inner surface 21b of the opaque section 32, on the other hand, faces inwardly toward the vehicle compartment 70 and thus will not be exposed to rain and wind.

Therefore, in the resin-made garnish 21 according to the instant embodiment, a coating primer layer 101 is formed on the surface of the transparent section 30, and a further surface coating layer (hard coating layer) is formed on the primer layer 101. However, such surface-coating primer layers 101 and layer 102 are not formed on the inner surface of the opaque section 32.

Because the surface coating layer 102 is formed only on the necessary portion as noted above, the instant embodiment can simplify the step of forming the coating layer 102.

Further, the first adhering section 50 and left and right second adhering sections 55 and 56, which are formed integrally with the opaque section 32 of the resin-made garnish 21, are made of a polycarbonate material as with the opaque section 32. If the adhesives 60a and 60b are applied to the polycarbonate material, the polycarbonate might liquefy with the adhesives 60a and 60b that are, for example, urethane adhesives.

To avoid the liquefying of the polycarbonate, a primer layer 103 for protecting from the adhesives 60a and 60b (hereinafter referred to as "adhering primer layer") is formed on the inner surface of the opaque section 32. Further, a similar adhering primer layer 103 is also formed on the adhering surfaces of the left and right adhering members 63 and 64 shown in Fig. 3.

Of the first adhering section 50, the upper and lower adhering portions 53 and 54 are provided on the opaque section 32. Thus, by forming the adhering primer layer 103 on the opaque section 32, the adhering primer layer 103 can be formed on the upper and lower adhering portions 53 and 54.

Further, the left adhering member 63 includes the left adhering portion 51 as its adhering surface, while the right adhering section 64 includes the right adhering portion 52 as its adhering surface. Adhering primer layer 103 is also formed on the adhering portions 51 and 52 of the left and right adhering members 63 and 64.

The left and right adhering portions 51 and 52 and the upper and lower adhering portions 53 and 54 together constitute the first adhering section 50, as set forth above. Thus, the adhering primer layer 103 can also be formed on the first adhering section 50.

The adhesive 60a is applied to the adhering primer layer 103 formed on the first adhering section 50, and the first adhering section 50 is adhered, via the applied adhesive 60a, to the adhering surfaces 29a of the middle lower member 27, left frame member and right frame member 29 that are component parts of the vehicle body 11.

Further, with the left and right second adhering sections 55 and 56 and adhering primer layer 103 provided on the opaque section 32, the primer layer 103 can be formed on the left and right second adhering sections 55 and 56 by forming the layer 103 on the opaque section 32. Further, the adhering primer layer 103 is formed on the left and right second adhering sections 55 and 56 so that the adhesives 60b can be applied to the primer layer 103 with no significant inconvenience. The second adhering section 55 is adhered to the adhering surface of the middle upper member 26 by means of the applied adhesive 60b.

With the aforementioned arrangements, the adhesives 60a and 60b can be reliably prevented from contacting the polycarbonate-made opaque section 32 (i.e., first adhering section 51 and left and right second adhering sections 55 and 56) during the operation for attaching the resin-made garnish 21 to the vehicle body 11. Namely, the adhesives 60a and 60b can be interposed between the adhering primer layer 103 and the vehicle body 11. Thus, the unwanted liquefying of the first adhering section 51 and left and right second adhering sections 55 and 56 can be reliably prevented, so that the adhesion, to the vehicle body 11, of the first adhering section 51 and left and right second adhering sections 55 and 56 can be kept in stable condition.

Whereas the preferred embodiment of the present invention has been described above as including the second adhering section at two positions (i.e., left and right second adhering sections 55 and 56), the second adhering section may be provided at only one position or at three or more positions.

Further, whereas the preferred embodiment has been described above as including the stop lamp 65 as the light-emitting member for attachment to the resin-made garnish 21, the present invention is not so limited, and the light-emitting member may be a parking lamp or the like rather than the stop lamp.

Furthermore, whereas the preferred embodiment has been described above as including the clips 79 and 88 as the fastener members for fastening the resin-made garnish 21 to the vehicle body, the present invention is not so limited, and bolts and/or the like may be used as the fastener members.

Furthermore, the left and right adhering members 63 and 64 may be formed into any desired shape matching the contour of the vehicle body.

Furthermore, the shapes of the upper middle mounting portion 41, upper left mounting portion 42, upper right mounting portion 43 and lower mounting portions 45 may be chosen as desired in accordance with the contour of the vehicle body.

Furthermore, the shapes of the left and right outer lamp mounting portions 61 and 62 and the left and right inner lamp mounting portions 57 and 58 may be chosen as desired in accordance with the contour of the vehicle body.

The present invention arranged in the above-described manner is very suitable for use in vehicles provided with a resin-made garnish for attachment to the vehicle body as an exterior member.

## Claims

1. A vehicular garnish structure (20) comprising a garnish (21) for attachment to a vehicle body (11) as an exterior member, the garnish including a transparent section (30) and an opaque section (32),
wherein said opaque section (32) has mounting means (34) integrally formed therewith for attaching said garnish to the vehicle body, **characterized in that**
said garnish (21) is a resin-made garnish (21), wherein said transparent section (30) and opaque section (32) are formed integrally of a transparent resin material and opaque resin material, respectively, and
said resin-made garnish (21) has an entire area of an outer surface thereof formed by said transparent section (30), and said opaque section (32) is overlappedly provided on a part of a reverse surface (21b) of said transparent section (30)

2. The vehicular garnish structure of claim 1, wherein said mounting means (34) includes a mounting portion (41, 42, 43, 45) for supporting a fastener member (79, 88) to attach said resin-made garnish to the vehicle body by means of the fastener member.

3. The vehicular garnish structure of claim 1, wherein said mounting means (34) includes an adhering section (50, 55, 56) for attaching said resin-made garnish (21) to the vehicle body (11) by means of an adhesive (60a, 60b).

4. The vehicular garnish structure of any one of claims 1-3, wherein said resin-made garnish (21) has a space (59) formed in a reverse face side thereof for receiving therein a light-emitting member (65) capable of emitting light outwardly of the vehicle body, and a light-emitting-member-mounting section (36) formed integrally with said opaque section (32), on the reverse surface of said resin-made garnish (21), for mounting the light-emitting member (65), and
wherein the light emitted by the light-emitting member (65) is irradiated outwardly of the vehicle body (11) through said transparent section (30).

## Patentansprüche

1. Fahrzeug-Besatz-Struktur (20), umfassend einen Besatz (21) zum Anbringen an einem Fahrzeugkörper (11) als ein äußeres Element, wobei der Besatz einen transparenten Abschnitt (30) und einen opaken Abschnitt (32) aufweist,
wobei der opake Abschnitt (32) integral damit ausgebildete Montagemittel (34) aufweist, um den Besatz an dem Fahrzeugkörper anzubringen,
**dadurch gekennzeichnet, dass** der Besatz (21) ein aus Harz/Kunstharz hergestellter Besatz (21) ist, wobei der transparente Abschnitt (30) und der opake Abschnitt (32) jeweils integral aus einem transparenten Harz/Kunstharz-Material und einem opaken Harz/Kunstharz-Material gebildet sind, und
der aus Harz/Kunstharz hergestellte Besatz (21) einen ganzen Bereich einer Außenfläche davon aufweist, der durch den transparenten Abschnitt (30) gebildet ist, und der opake Abschnitt (32) überlappend auf einem Teil einer rückwärtigen Fläche (21b) des transparenten Abschnitts (30) vorgesehen ist.

2. Fahrzeug-Besatz-Struktur nach Anspruch 1,
wobei die Montagemittel (34) einen Montageabschnitt (41, 42, 43, 45) zum Lagern eines Befestigungselements (79, 88) umfassen, um den aus Harz/Kunstharz hergestellten Besatz (21) vermittels des Befestigungselements an dem Fahrzeugkörper anzubringen.

3. Fahrzeug-Besatz-Struktur nach Anspruch 1, wobei die Montagemittel (34) einen Haft-Abschnitt (50, 55, 56) umfassen, um den aus Harz/Kunstharz hergestellten Besatz (21) vermittels eines Haftmittels (60a, 60b) an dem Fahrzeugkörper (11) anzubringen.

4. Fahrzeug-Besatz-Struktur nach einem der Ansprüche 1 bis 3, wobei der aus Harz/Kunstharz hergestellte Besatz (21) einen Raum (59) aufweist, der auf einer Seite einer rückwärtigen Fläche davon ausgebildet ist, um darin ein Licht-emittierendes Element (65) aufzunehmen, welches dazu in der Lage ist, Licht von dem Fahrzeugkörper nach außen zu emittieren, und einen Montageabschnitt (36) für das Licht-emittierende Element aufweist, der integral mit dem opaken Abschnitt (32) ausgebildet ist, auf der rückwärtigen Fläche des aus Harz/Kunstharz hergestellten Besatzes (21), um das Licht-emittierende Element (65) zu montieren, und
wobei das von dem Licht-emittierenden Element (65) emittierte Licht von dem Fahrzeugkörper (11) nach außen durch den transparenten Abschnitt (30) hindurch gestrahlt wird.

## Revendications

1. Structure de garniture (20) pour véhicule comprenant une garniture (21) pour la fixation à un corps de véhicule (11) en tant qu'élément extérieur, la garniture comprenant une section transparente (30) et une section opaque (32),
dans laquelle ladite section opaque (32) a des moyens de montage (34) formés de manière solidaire avec celle-ci pour fixer ladite garniture sur le corps de véhicule,
**caractérisée en ce que :**
ladite garniture (21) est une garniture réalisée en résine (21), dans laquelle ladite section transparente (30) et ladite section opaque (32) sont formées de manière solidaire avec un matériau de résine transparent et un matériau de résine opaque, respectivement, et
ladite garniture réalisée en résine (21) a toute une surface de sa surface externe formée par ladite section transparente (30), et ladite section opaque (32) est prévue par chevauchement sur une partie d'une surface inversée (21b) de ladite section transparente (30).

2. Structure de garniture pour véhicule selon la revendication 1, dans laquelle lesdits moyens de montage (34) comprennent une partie de montage (41, 42, 43, 45) pour supporter un élément formant fixation (79, 88) afin de fixer ladite garniture réalisée en résine sur le corps de véhicule au moyen de l'élément formant fixation.

3. Structure de garniture pour véhicule selon la revendication 1, dans laquelle lesdits moyens de montage (34) comprennent une section d'adhérence (50, 55, 56) pour fixer ladite garniture réalisée en résine (21) sur le corps de véhicule (11) au moyen d'un adhésif (60a, 60b).

4. Structure de garniture pour véhicule selon l'une quelconque des revendications 1 à 3, dans laquelle ladite garniture réalisée en résine (21) a un espace (59) formé dans son côté de face inversée pour recevoir à l'intérieur de celui-ci un élément d'émission de lumière (65) pouvant émettre de la lumière vers l'extérieur du corps de véhicule, et une section de montage d'élément d'émission de lumière (36) formée de manière solidaire avec ladite section opaque (32), sur la surface inversée de ladite garniture réalisée en résine (21), pour monter l'élément d'émission de lumière (65), et
dans laquelle la lumière émise par l'élément d'émission de lumière (65) est rayonnée vers l'extérieur du corps de véhicule (11) par ladite section transparente (30).
